# EUROPEAN PATENT APPLICATION

(11) **EP 2 810 895 A1**
(43) Date of publication of application: **10.12.2014**
(21) Application number: 14183258.4
(22) Date of filing: 18.05.2011
(51) Int. Cl.: B65D 75/58, B65B 9/20, B65B 61/18

(54) **Easy open and reclosable flexible film package, laminate and method for producing the package**

(30) Priority: 18.05.2010 US 345815 P; 06.12.2010 US 420080 P
(62) Divisional of application: 11722265.3
(71) Applicant: Intercontinental Great Brands LLC, East Hanover, NJ 07936 (US)
(72) Inventor: Lyzenga, Deborah, Long Valley, NJ 07853 (US); French, Louis, East Hannover, NJ 07936 (US)
(74) Representative: Boult Wade Tennant

(57) **Abstract**

A package comprises a flexible film (22) defining an interior contents cavity and having a first pair of edge portions forming a first seal (38), a second pair of edge portions forming a second seal (36), and a longitudinal seal (40) extending from the first seal (38) to the second seal (36). A score (24) is formed in the flexible film (22) and defining, at least in part, an opening to the interior contents cavity. A closure layer (26) covers the score (24) and a portion of the flexible film around the score, the closure layer (26) extending over more than half of a width of the flexible film. A pressure sensitive adhesive lies between the closure layer (26) and the flexible film (22). The package is opened along the score (24) by partial removal of the closure layer (26) from the flexible film (22) and the extension of the closure layer over more than half the width of the flexible film resists further removal of the closure layer from the flexible film.

## Description

### Related Applications

This application claims the benefit of U.S. Provisional Application Serial No. 61/345,815, filed May 18, 2010, and U.S. Provisional Application Serial No. 61/420,080, filed December 6, 2010, which are incorporated by reference in their entirety herein.

### Technical Field

This disclosure relates generally to flexible packaging and, in particular, to flexible packaging having a reclosable opening.

### Background

Flexible packaging is well known in the art for use in containing food products. Flexible films can provide a lightweight package with a substantially hermetic seal for shipping and storage of a variety of food products, including, for example, crackers, chewing gum, chocolate, cookies, cheese, sandwiches, biscuits, candy, meat products, and dried fruits and vegetables. Some of these flexible film packages also may contain structural supports such as a frame or tray.

One example of such flexible film packages are flow-wrap type packages, which may employ a continuous film or web to envelop a product during assembly or formation of the package. Flow-wrap packages may include, for example, horizontal or vertical fin seal or lap seal packages, end seal wrap, horizontal bagging and pillow-pouch packaging. In one configuration, flow-wrap packaging positions a film, such as polyethylene or polypropylene, adjacent to a product, wraps the film around the product, forms a seal from the ends (opposing edges) of the film, and then forms seals at either end of the product. These seals may be permanent and also may provide some structural integrity. Flexible film packages have other advantages. For example, they can be manufactured at substantially lower cost than rigid containers, are lightweight (resulting in lower transportation costs) and may save space resulting in less required storage space.

Despite the advantages of flexible film, these packages are sometimes difficult for consumers to open. Further, these packages often contain various amount of food product and a consumer may not want to consume all of the food product at one time. Therefore, a reclose feature may be included to provide users with an easy, efficient manner of preserving some of the food product for a later time. The reclose feature may provide a partial barrier to moisture and gas resulting in a partially hermetic seal, though it may not provide a complete hermetic seal, and may help to retain the shelf-life or freshness of a food product contained within the package.

Flexible packages having a resealable or reclosure feature are sometimes difficult to manufacture on equipment that is widely available. For example, some flexible film packages may require specialized die assemblies or heat seal bars to produce the seals, package openings, and other package features related to the reclose feature.

### Summary

Accordingly, provided herein are embodiments for an easy open flexible flow-wrap package, which can have an initial seal against ambient atmosphere (e.g., a gas/oxygen and moisture barrier) for extended periods of time and have a pressure sensitive closure layer (label) laminated above a score (tear) line in the flow-wrap film, which can provide a package opening. The embodiments can be easily opened and reclosed/resealed, while maintaining package integrity. The embodiments can also maintain an opening to allow clean hand-to-mouth product access.

By one approach, a package can have a flexible film forming a body defining an interior contents cavity and having a first pair of opposing edge portions forming a first end seal, a second pair of opposing edge portions forming a second end seal, and a third pair of opposing edge portions forming a longitudinal fin seal extending from the first end seal to the second end seal; the body having a first side portion having the longitudinal fin seal and a second side portion generally opposite the first side portion; a score formed in the flexible film at the second side portion and defining an opening to the contents cavity upon initial rupturing; a closure layer covering the score and a portion of the second side portion around the score and extending on to at least a portion of the first side portion; a pressure sensitive adhesive being between the closure layer and the flexible film; and the closure layer on the second side portion being capable of at least partial removal from the flexible film to rupture the score and form an opening, and the closure layer on the first side portion resisting further removal of the closure layer from the flexible film.

The pressure sensitive adhesive can have a predetermined affinity between the closure layer and the flexible film such that the score ruptures upon removal of the closure layer from a portion of the second side portion.

The closure layer can essentially form a living hinge between a first portion of the closure layer covering the score and a second portion of the closure layer spaced from the score. Further, the closure layer generally extends transverse to the longitudinal fin seal. The top edge portion of the closure layer can extend at an angle toward the second end seal as it extends across the second wall portion. In one approach, the angle can be in a range of about 15 to 45 degrees.

In one approach, the closure layer can include a varying width therealong and narrow portions coinciding with transition portions of the body on each side of the longitudinal fin seal between the first side portion and the second side portion. The transition portions can include soft folds in the flexible film between the first side portion and the second side portion. The narrow portions can each include an arcuate edge portion.

In another approach, the closure layer can have a pair of terminal end portions on the first side portion. The terminal end portions can be enlarged relative to at least another portion of the closure layer. The closure layer can be closer to the first end seal than the second end seal. The terminal end portions can angle toward the second end seal.

In one approach, the score can be closer to the first end seal than the second end seal. The score can be arcuate, and in one approach, the arcuate score faces the second end seal. Alternatively, the score can be rectilinear, pointed, and the like. Alternately, the score can include a pair of terminal ends configured to resist further rupturing of the flexible film, such as the terminal ends being configured as hooks.

In one approach, the closure layer can include a tack free gripping portion to remove the closure layer from at least a portion of the second side. The tack free gripping portion can extend adjacent to one of the first and second end seals. In one approach, the tack free gripping portion includes a deadener on the pressure sensitive adhesive. In another approach, the tack free gripping portion can include a portion of the closure layer adhered to itself with the presser sensitive adhesive. In yet another approach, the tack free gripping portion is void of pressure sensitive adhesive.

The flexible film can be a laminate structure. In one approach, the film can be a laminate of polyethylene terephthalate and oriented polypropylene having a thickness in a range of about 1.5 to 2.5 mils. In another approach, the flexible film laminate can be a laminate of polyethylene terephthalate having a thickness in a range of about 0.4 to 1.0 mill and oriented polypropylene having a thickness in a range of about 0.6 to 1.2 mils.

The closure layer can be a bi-axially oriented polypropylene having a thickness in a range of about 1.2 mil to 5 mil.

A for manufacturing a flexible package can include the steps of: forming a score in a portion of a continuous web of flexible film having a longitudinal axis and a predetermined width transverse to the longitudinal axis; applying a discrete closure layer to the continuous flexible film along the longitudinal axis with a pressure sensitive adhesive, the continuous closure layer being applied over more than half of than half of the predetermined width and over the score; forming a continuous longitudinal fin seal from a pair of opposing edges of the continuous web of flexible film; forming a first end seal and a second end seal; and forming an adhesive-free gripping portion on the discrete closure layer.

A laminate for producing a flexible package can include a continuous web of flexible film having a width and a longitudinal axis; a discrete closure layer applied to more than half of the width of the continuous web of flexible film and along the longitudinal axis with pressure sensitive adhesive; and the continuous web and the continuous closure layer configured to be formed into a series of identical package forming blanks, the flexible film of each identical package forming blank having a score formed therein that coincides with at least a portion of the closure layer and that subsequently forms a package opening when ruptured.

In one approach, the laminate can have a closure layer bi-axially oriented polypropylene having a thickness in the range of about 1.2 mil to 5 mil; and the continuous film is laminate in a range of about 1.5 to 2.5 mils having a polyethylene terephthalate layer and an oriented polypropylene layer. Optionally, the film laminate can include ink and primer layer disposed between the polyethylene terephthalate layer and oriented polypropylene layer.

In another approach, a method of in-line packaging of products in a series of packages is provided that can have the steps of: merging a closure layer to a continuous film web having longitudinal edges spaced a predetermined width; providing adhesive between the closure layer and the continuous film web across less than the predetermined width but more than half of the predetermined width; scoring the continuous film web corresponding to the closure layer to define an opening in the continuous film web upon initial rupturing caused by removing the continuous substrate; forming a longitudinal seal along the longitudinal edges; forming a trailing end seal between adjacent packages of a series; providing products in a series to be packaged; and forming a leading end seal.

Other features will become more apparent to persons having ordinary skill in the art to which the package pertains and from the following description and claims.

### Brief Description of the Drawings

Fig. 1 is a perspective front view of a flexible film package;
Fig. 2 is a perspective rear view of a flexible film package;
Fig. 3 is a perspective front view of another flexible film package having a score line and label orientation proximal to a leading end-seal;
Figs. 4-6 are perspective front views of a flexible film package in an opened position showing exemplary product applications;
FIG. 7 is a perspective front view of a resealed flexible film package;
FIG. 8 is a front plan view of a flexible film package;
FIG. 9 is a rear plan view of a flexible film package;
FIG. 10 is a front plan view of an opened flexible film package;
FIG. 11 is a plan view of a section of a series of flexible film package blanks;
FIG. 12 is a plan view of a closure layer (label) for a flexible film package;
FIG. 13 is a plan view of a section of a series of flexible film package closure layers suitable for continuous label roll-stock applications;
FIG. 14 is a partial side view of a flexible film 'slug' package in an open position;
FIG. 15 is a perspective front view of another flexible film 'slug' package;
FIG. 16 is a perspective front view of another flexible film 'slug' package;
FIG. 17 is a perspective front view of another flexible film 'slug' package opened;
FIG. 18 is a perspective front view of another flexible film 'slug' package resealed;
FIG. 19 is a front plan view of another flexible film package;
FIG. 20 is a rear plan view of a flexible film package;
FIG. 21 is a plan view of a flexible film package blanks;
FIG. 22 is a plan view of a flexible film package blanks;
FIG. 23 is a plan view of a flexible film package blanks;
FIG. 24 is a front plan view of another flexible film package;
FIG. 25 is a rear plan view of another flexible film package;
FIG. 26 is a partial perspective view of an in-line process of vertical forming of a series of flexible film packages;
Fig. 27 is a sectional view of an film/label laminate for a flexible film package taken along section lines XXVII-XXVII in Fig. 11; and
Figs. 28-33 are exemplary score lines for an opening of a flexible film package.

### Detailed Description of the Preferred Embodiments

Pursuant to these various embodiments, flexible film packages and methods of producing such packages are provided herein. The flexible film packages may have at least a partial, initial seal against ambient atmosphere and are easily openable and reclosable. More particularly, the initial seal, which is present prior to initial opening of the flexible film package, may provide at least a partial barrier against ambient atmosphere including gas and moisture for an extended period of time. For example, the initial seal of the flexible film package may provide a light barrier and also a gas and moisture barrier for at least 6 to 8 months prior to initial opening. In some applications, a gas and moisture barrier may be desired for even longer periods of time prior to initial opening. Further, the flexible film packages are generally reclosable such that the shelf-life of food products contained therein is not unnecessarily shortened due to exposure to the ambient atmosphere once the flexible film package is initially opened, or to at least provide for product containment. Thus, the flexible film packages may have a reseal feature that provides a reclosable seal that is present subsequent to initial opening of the package. While the present disclosure is described for food product applications, it also can be applied to non-food, medical, pharmaceutical, industrial packaging applications and the like.

In one approach, the flexible film package is generally configured to accommodate multiple servings of a food product. Thus, the reclose characteristics of the flexible film package can help to contain product after initial opening and/or to retain freshness or shelf-life of product remaining within the package subsequent to initial opening.

The seals of the flexible film package, such as any longitudinal seals, including, for example, a fin or lap seal, and any end seals may be hermetic (and also may have varying degrees of hermeticity, such as partial or substantial hermetic seals) to help retain the shelf-life of any food products contained therein. The seals may be formed by a variety of processes, such as, for example, hot seal, cold seal, low tack seal, sonic waves, and combinations thereof. Any reclosable seals of the flexible package, such as that formed around the package opening, may be formed, in part, by a pressure sensitive adhesive located between the flexible film and an the elongated closure layer. This reclosable seal feature may be formed by a variety of manufacturing processes.

The flexible film packages may have a variety of configurations, including, for example, a bag, a pouch, or other shapes such as a cylindrical-shape, a column-shaped, or a rectilinear-shape, among others. For example, the flexible film package may have squared edges, such as that found on a primarily rectilinear-shaped package, or may have more curvilinear-shaped edges, such as that found on more circular or ovoid-shaped packages. Further, the flexible film package may be formed around the food product, such as a package having a sleeve configuration, that is wrapped around a discrete stack or stacks of food products. In other applications, the flexible film packages may be fully or partially formed and then filled with the food products, which may be helpful for various discrete food products. The various configurations may be easily opened and resealed while maintaining package integrity.

By one approach, the flexible film has two opposing edge portions that meet to form a longitudinal seal extending from a first end seal (e.g., leading end seal) to a second end seal (e.g., trailing end seal). The flexible film may have a score that defines a package opening upon initial rupture or initial opening. In one illustrative embodiment, an elongated closure layer extends over the score on a front panel and extends beyond the front panel along a blind fold on at least one side (and preferably both sides) along the back panel approaching the longitudinal seal. A pressure sensitive adhesive may be located between the flexible film and the elongated closure layer to laminate the two. The elongated closure layer may have a tack-free gripping portion used to release at least a portion of the elongated closure from the flexible film to form the package opening.

By one approach, the package configuration and shape may be primarily influenced by the products contained within the package, in part, due to the flexibility of the laminate film. In another configuration, the flexible film may be configured as a flow-wrap or overwrap around a support structure, such as an internal rigid support or product tray.

Methods for producing the flexible film packages provided herein may include forming a score in a portion of a continuous web of flexible film having a longitudinal axis and applying a closure layer in the form of a discrete label over the score along the longitudinal axis with a pressure sensitive adhesive. By one approach, the closure layer may be applied over a partial width of the continuous web of flexible film. The method also may include forming a continuous longitudinal seal from two opposing edges of the continuous web of flexible material and forming a first end seal and a second end seal. In one approach, an adhesive-free grasping portion may be formed at a first end of the flexible package. As discussed below, the flexible packages may be formed in off-line and in-line processes with respect to the packaging of product and also may be formed in both horizontal and vertical form-fill-seal operations, among others.

A method of packaging products in a series of packages may include feeding a continuous film web having longitudinal edges and a predetermined width between the longitudinal edges. The method also may include merging a closure layer substrate with the continuous film web across less than the entire predetermined width. By one approach, the continuous film web is scored to define an opening in the film web upon initial rupture opening once the substrate is removed from the continuous film web and an adhesive, such as a pressure sensitive adhesive that provides a degree of releaseability and reclosability, is provided between the continuous substrate and the continuous film web. If performed in-line, the method may provide products in a series for packaging, and the continuous film web and substrate may be wrapped around the products. Further, a longitudinal seal, such as a fin or lap seal, may be provided along the longitudinal edges of the continuous film web, and a leading and trailing end seals may be provided between adjacent packages of the series of packages.

The flexible film package may include a score that defines a package opening upon initial rupture or initial opening. The term "score" as used herein may describe any type of mechanically-formed or cut score line, a laser-formed score, or any other scoring means that would compromise the integrity of the film without rupturing it (i.e., a line of weakness). A score may be disposed partially through the depth of the flexible film, or it may be a die cut through the entire depth of the film over a given line. If partially cut through the film, the score also may be formed on either side of the flexible film such that the score may be cut into the exterior or interior surface of the flexible film. In one example, the score is made into the flexible film from the interior surface of the flexible film and extends through the flexible film and substantially through the pressure sensitive adhesive. In addition, the score may also be a discontinuous line such as a set of perforations, which also may be either partially through the depth of the flexible film or completely through the entire depth of the flexible film.

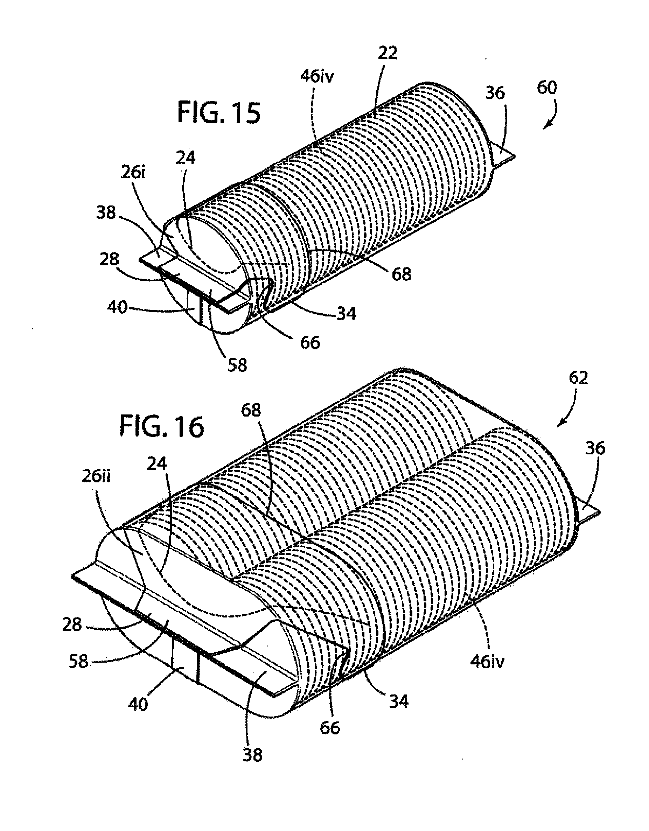

In some embodiments described below, the package shape can be a pouch having a front panel and a rear panel defined by fold lines in the film. It is noted again though that given the flexibility of the laminate film, package shape can be influenced by the product contents or internal trays. The packaging can be a slug or even dual-slug configuration (FIGS. 15 and 16 respectively). In short, any packaging that allows flexibility to create an opening for clean product access can use the present embodiments to provide an easy-open, re-closable feature, which can maintain the package in an open position.

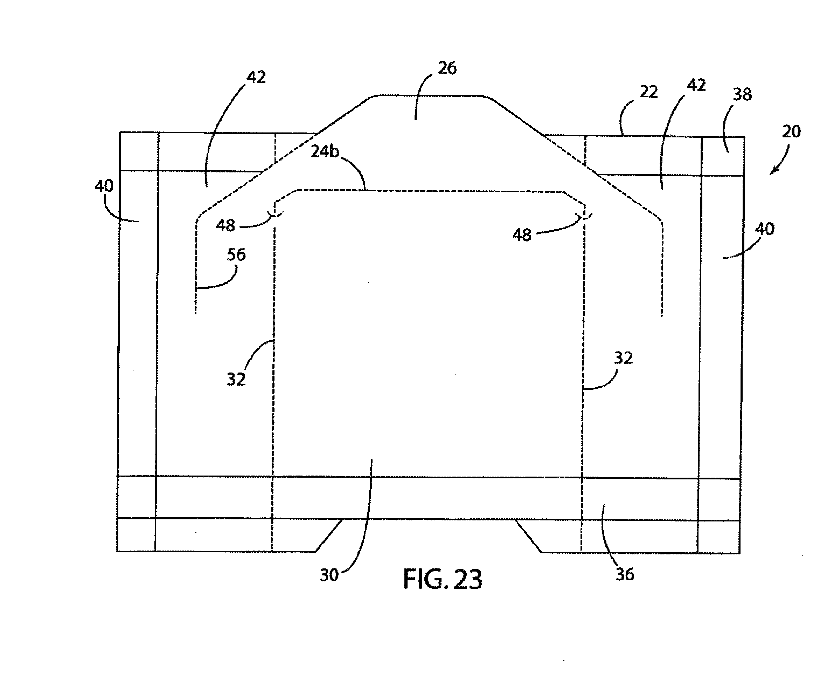

By one approach, the elongated closure layer is disposed on the flexible film over the score. The elongated closure layer may comprise a label such as a label with a backing, a release liner or a liner-less label. In another configuration, the elongated closure layer may include a second flexible film with pressure sensitive adhesive disposed between the flexible film and the second flexible film. As discussed below (See, e.g., Fig. 23), the pressure sensitive adhesive may be an interstitial layer to a laminated film structure such that the pressure sensitive adhesive is laminated between the flexible film and the second flexible film layers. Though a linerless label may be similar to tape, a linerless label oftentimes requires additional printing.

As suggested, the package opening is preferably reclosable such that at least a partial hermetic seal can be obtained around the opening (in some configurations, the reclosable opening provides product containment). The pressure sensitive adhesive (PSA) between the flexible film and the elongated closure layer helps produce the reclosing characteristics of the package opening. The pressure sensitive adhesive is preferably neutral or non-reactive to the product to be packaged. The pressure sensitive adhesive may be suitable for resealing in a variety of conditions, such as ambient and refrigerated conditions, to note but a few. In some configurations, the pressure sensitive adhesive may provide a partial hermetic seal even in refrigerated conditions (i.e., the pressure sensitive adhesive can be operable in a temperature range of about -10 to 90 degrees Celsius; and preferably in the range of about 2 to 7 degrees Celsius). The pressure sensitive adhesive may be applied directly to the film but also may be applied to ink or another coating on the film. By one approach, the pressure sensitive adhesive remains attached to the closure layer, even after the closure layer is repeatedly opened and reclosed.

The closure layer may be transparent, opaque, or optionally printed. The closure layer may include any of a variety of flexible or semi-rigid polymers such as, for example, an oriented polypropylene (OPP), including a bi-axial OPP, a polyethylene terephthalate (PET) layer. By one approach, the continuous closure layer may have a thickness about in the range of about 1.2 mil to 5 mil a preferably about 2 mil. For some applications, PET may be desirable because of its thermal resistance in creating non-peelable seals. The closure layer may be applied to cover at least the score line. Further, the closure layer preferably extends beyond the score line to provide sufficient marginal region around the score to effectively reseal the package opening once the score has been initially opened or ruptured. In affect the closure layer forms a living hinge between a first portion of the closure layer covering the score and a second portion of the closure layer spaced from the score. A living hinge can be considered a thin flexible web of material that joins two bodies together.

Turning now to the figures, there are illustrative preferred embodiments of a present flow-wrap package design generally indicated at 20, a slug-package design generally indicated at 60 and 62 (FIGS. 15-18), and processes for making same.

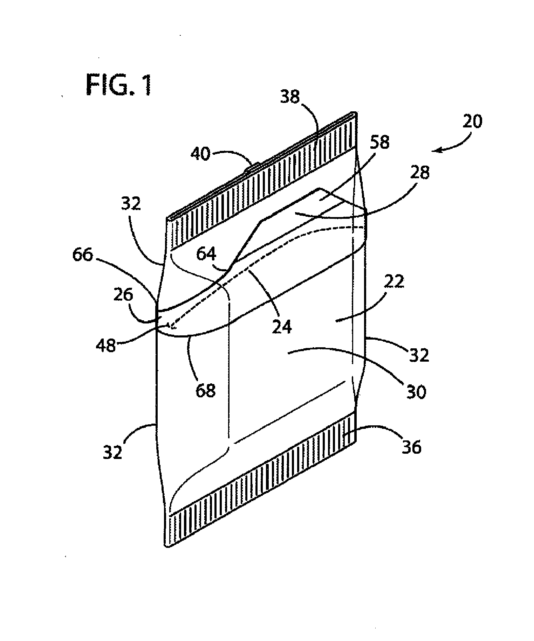

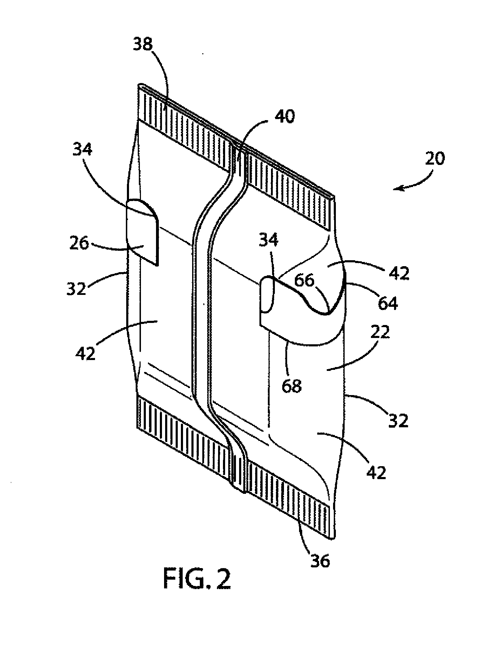

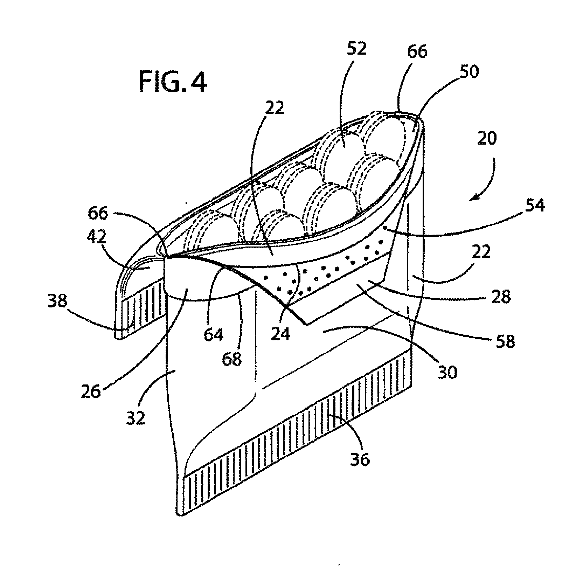

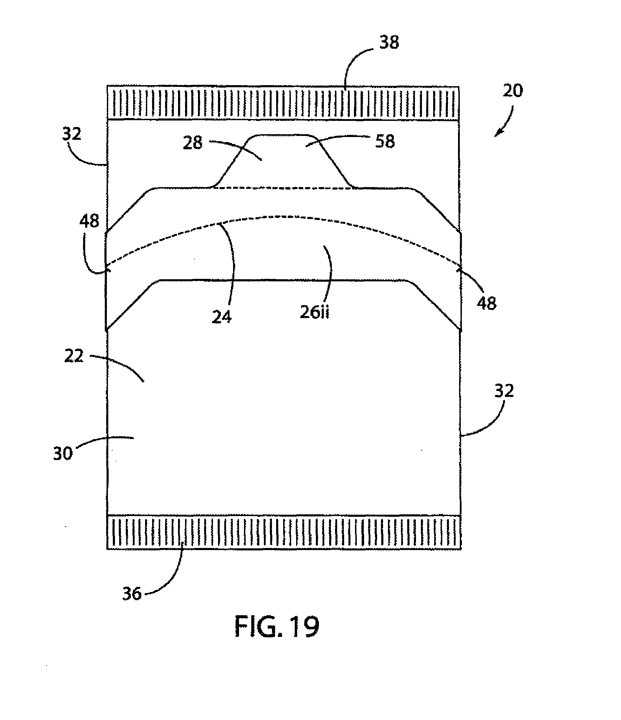

Generally, as shown in the figures, a flow-wrap package 20 can be formed from a film 22 having a score 24. A substrate forming a closure layer is illustrated as a discrete label 26 can cover at least the entire score 24 on film 22. Figures 1-3, 8-9, 15-16, 19-20 and 24-25 show package 20 in an un-opened and sealed configuration. Figures 4-6, 10, 14, 17, show package 20 in an opened position.

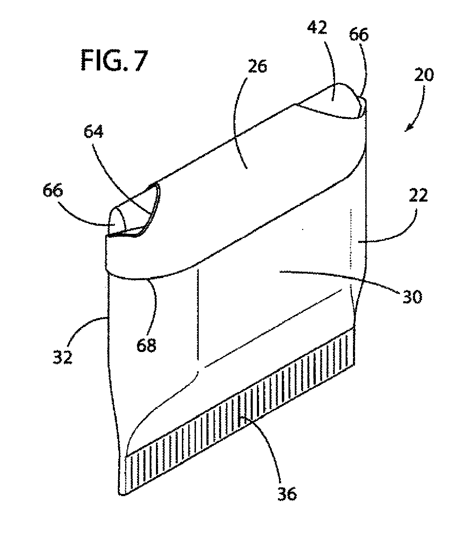

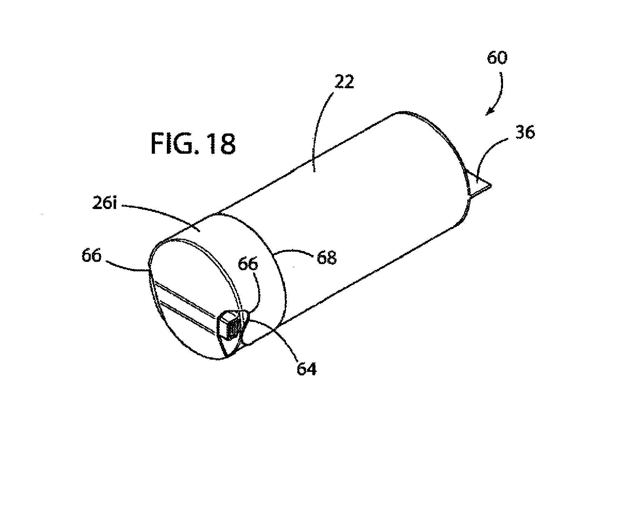

Figures 7 and 18 show package 20 reclosed after initial opening. By one approach, after the consumer has removed some of the products from the flexible film package, the flexible film may be rolled, folded, or otherwise flattened to evacuate air from inside of the package. Then, label 26 may be wrapped over the rolled film and the product within the package making the package smaller, with less air space and thus, may improve shelf-life of the product. Such configurations are generally employed for packages without a structural support, such as a frame or tray; however, it is also anticipated that such a configuration may be employed with certain structural supports, depending on the configuration of the structural support and the flexible film.

Package 20 can be formed by joining opposite sides of the film to form a seal 40 (shown in the Figures as a fin-seal). Film 22 preferably has a sealant layer on an interior surface of the film. End-seals, such as a trailing end-seal 36 and leading end-seal 38, can also be provided. Preferably, end-seals 36 and 38 are non-peelable. The seals of the presented embodiments can be formed by heat seal, cold seal, sonic waves, low tack seal and various combinations thereof.

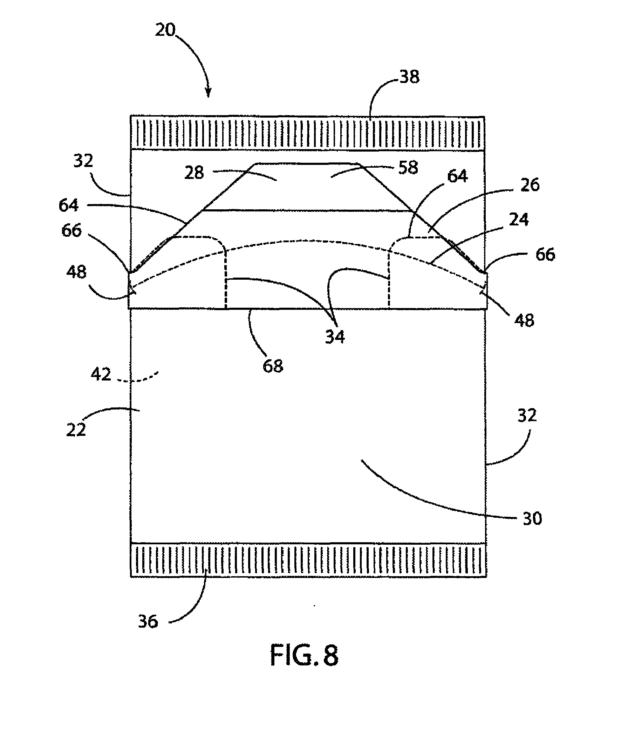

In use, a user can grip an unsealed inner surface 58 of a label 26 peel tab with one hand and a region on or near end-seal 38 with the other. The label peel tab can be peeled back rearwardly to form opening 50 until it reaches the "smile" 48 shown in FIG. 8. In any event, preferably, label 26 is not pulled off package 20 in use. In the embodiments, this is achieved by the tear resistance of label 26 extending towards the rear panel 42. The adhesive may be excluded on peel tab 28 of label 26, or it can be deadened in a variety of ways, such as with an ink, varnish, and the like.

Thus, the present embodiments can utilize the label properties and rear panel extensions of the label and "smile" 48 to control film 22 tear beyond score 24 under label 26. Preferably, label 26 is a discrete label to provide a peel tab and a means to propagate the score to open and to direct the tear longitudinally towards the trailing end-seal, but not past the trailing end-seal.

It is noted though that several score 24 configurations are possible within the scope of the present designs. Peel strength between package 20 surface and label 26 is greater than the force required to separate sides of score along score lines 24. As such, label 26 is peelable with respect to package 20 surface. Thus, continued pulling on tab 28 initiates rupture of score line 24, such as shown in FIGS. 4 - 6. Peel tab 28 can be any number of configurations, such as the illustrated trapezoidal shaped tab, though other shapes, such as square, radial, "V" shape, and the like are possible so long that it can provide a finger grip to initiate opening of the package.

By one approach the flexible film package design is a vertical formed, filled and sealed (VFFS) bagged product. Typically, VFFS bagged packaging does not allow full access to all contained product. One option though is to configure the package with a zipper arrangement (such as plastic zippers sold under the trade name of ZIPLOC by DOW Chemical) in horizontal orientation to a vertical package. This type of package, though, can require a heavier gauge of material to support the zipper structure and may include some type of tear strip. This can require multiple steps to open the package and may provide excessive use of materials. The present embodiments using tab 28 does not require a tear strip or a tearing component. Further, as shown in FIGS. 4-6, the present embodiments allow full access to the contents of the package. It is noted though that other embodiments of the present design can allow for Horizontal Form Filled and Sealed (HFFS) flow wrapped products.

Accordingly, the present embodiments provide a more cost effective package than typical zipper type pouch packaging. Further, the present embodiments require far less sealant since there is no need to weld a zipper onto the package. Further, given that a zipper is not needed, a thinner gauge film can be used, thus further reducing cost, waste, and materials. For example typical zipper package applications can use a trilamination film of 3 plus mils gauge. In this instance, the sealant alone can be 1.5 mils. In contrast, the present film 22 can be in the range of about 1.2 to 5 mils, and preferably in the range of about 1.5 to 2.5 mils. This can represent an approximately 50 percent reduction of package materials over zipper packaging.

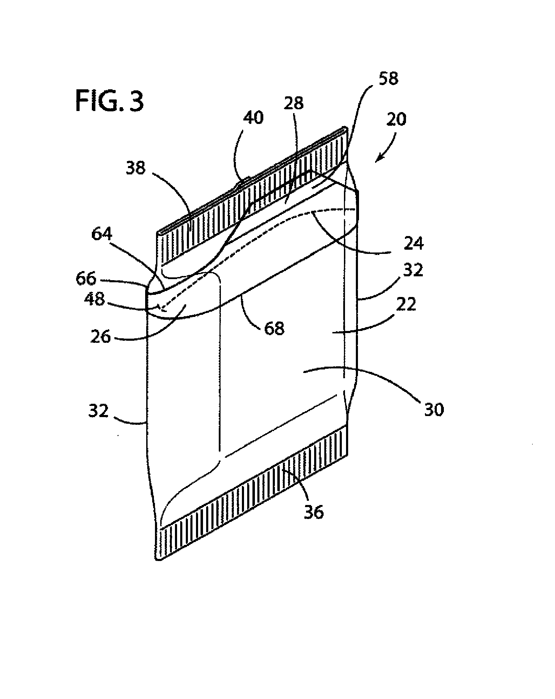

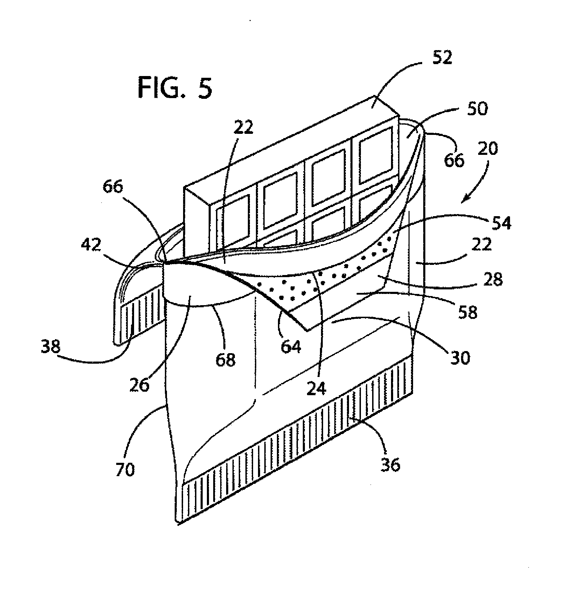

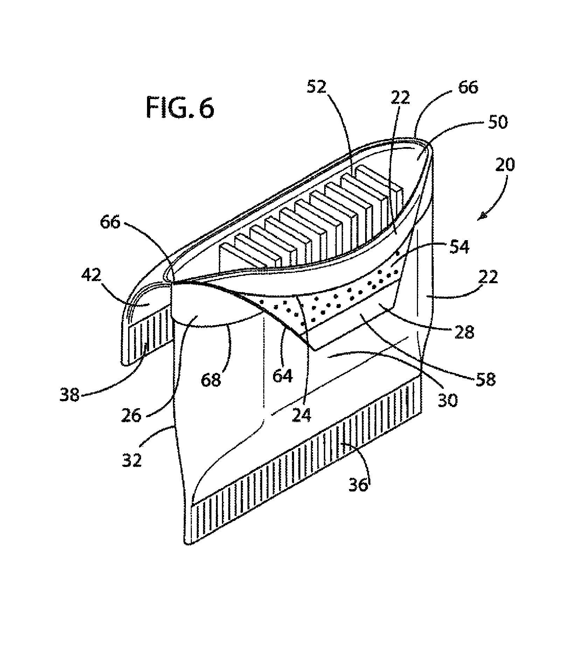

The features of the preferred embodiments are achieved using label 26 over a scored film 22, where the label extends horizontally across a front panel 30 of the package, beyond fold lines 32 to a rear panel 42 of package 20 and ending at label edge 34. Using this configuration, label 26 allows package 20 to fully open while providing rigidity to the package so that it remains open. Preferably, the vertical orientation of score 24 allows package 20 to be filled up to two-thirds full with product pieces. In FIG.3, label 26 and its associated score line 24 are oriented at or near a top (leading) end-seal 38. This allows a package opening at or near the top of the package, which can be useful for removal of products such as blocked products (e.g., chocolate bars - FIG. 5) or a row of stacked products (e.g., a row of individually wrapper chewing gum sticks - FIG. 6), particulate product (such as coffee), and the like. It is noted that these packages, with the exception of particulate products, would typically not be provided in a vertically form fed package.

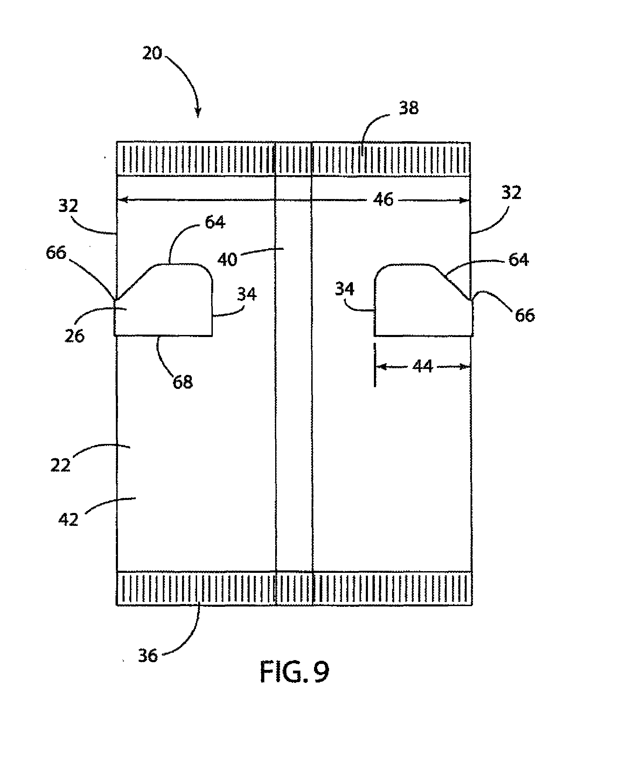

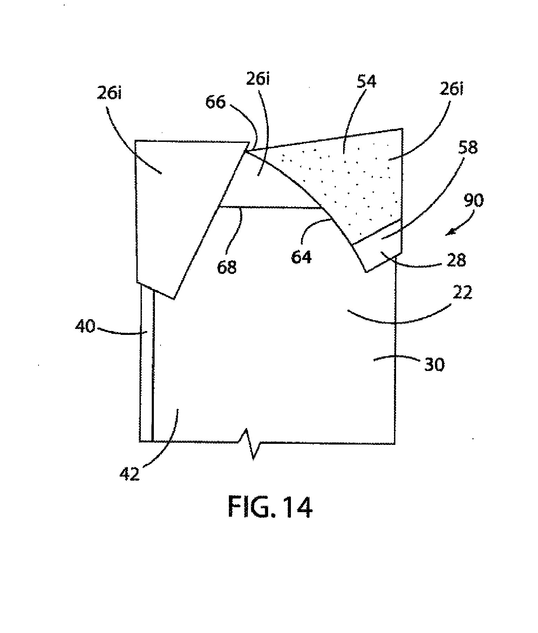

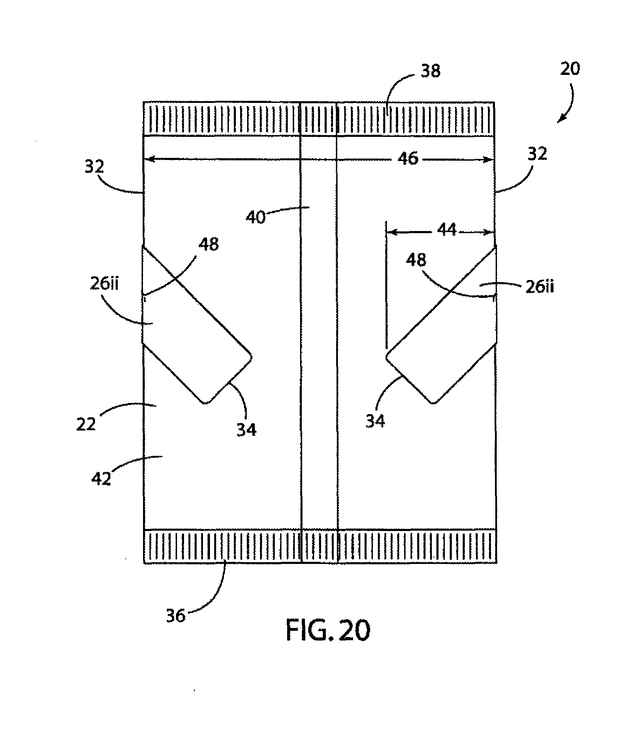

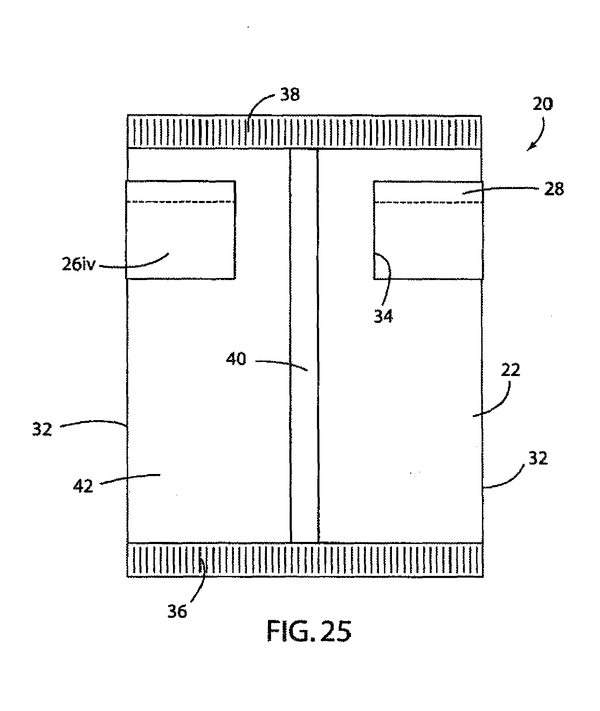

Preferably, in addition to extending horizontally across the front of the package to the rear wall, a label top edge 64 can extend downwardly (i.e., towards trailing end-seal 36) in a range of up to 45 degrees, and preferably about 30 degrees. The extent of the label across the rear panel 42 should be sufficient to restrict further propagation of the score tear line on the front panel 30. In the preferred embodiments, this extension can be about 10 percent to even 100 percent extension (dimension 44, FIG. 9 and 20) of the width of the rear panel (dimension 46, FIG. 9 and 20) for either or both the label ends 34, even if the label ends overlap across fin-seal 40, such as shown in FIG. 25. Preferably, the extension dimension 44 is about 25 percent. The preferred embodiment would minimize this dimension to reduce package material and cost. It is also noted that while the illustrated embodiments do not have side panels, alternate designs within the scope of the embodiments can feature cylindrical and more than two side panels. For example, FIGS. 14-18 illustrate the present embodiments in slug packaging configuration.

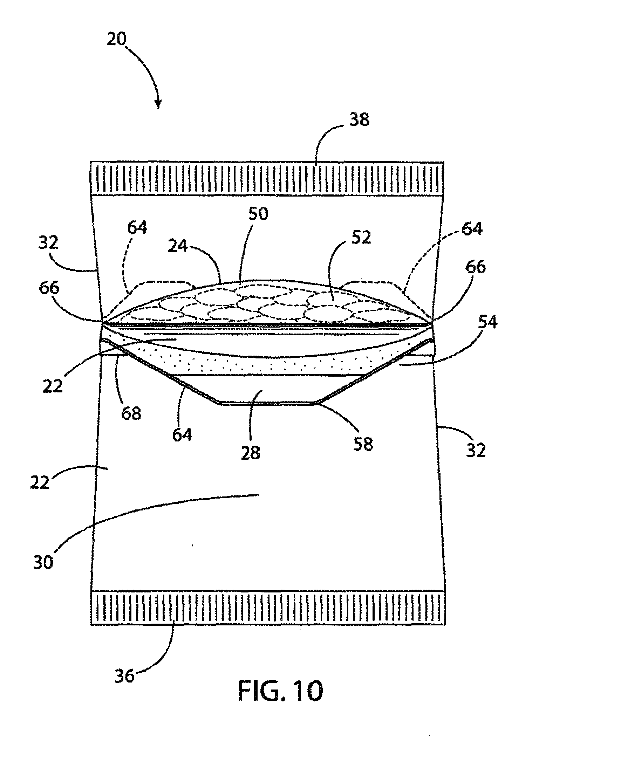

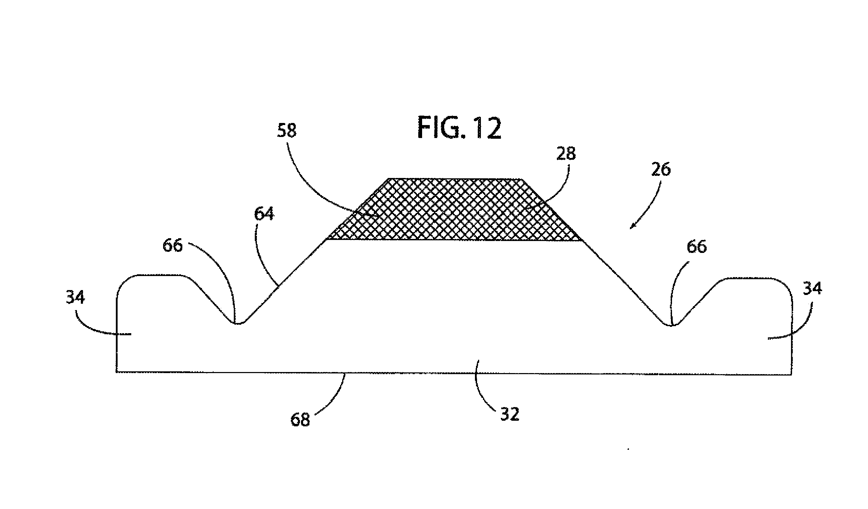

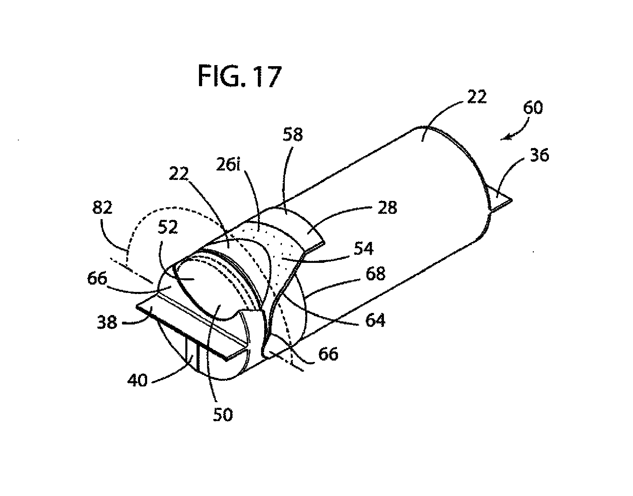

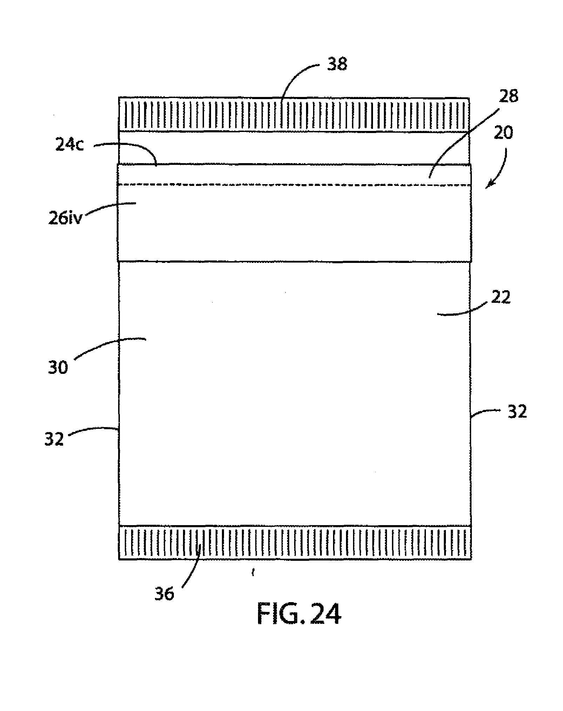

As shown most clearly in FIGS. 9 and 11-12, in preferred embodiments, label top edge 64 at or near fold line 32 at area 66 can be configured in a "V" shape to extend generally upwardly (i.e., towards top end-seal 38) as it extends horizontally towards thecenter (e.g., as shown - towards fin-seal 40) of package rear panel 42. It is noted that similar angle orientations such as found for top edge 64 extending along front panel 30 are possible for rear panel 42 and that, ultimately, many various geometries are possible within the scope of the present embodiments. The upwardly extending label top edge along rear panel 42 can provide additional package support to allow the downwardly peeled portion of front panel 30 to maintain a forward fold in an opened position, such as shown in FIG. 10 and 17. This will assist a consumer in avoiding contact with PSA 54 when reaching into the package opening. An additional advantage of maintaining the folded forward flap of front panel 30 would be that if the consumer pours product out of this opening, fewer crumbs and/or product would contact PSA 54. Other possible configurations can include a label configuration that continues the same downward wangle even as it wraps to the rear panel (or otherwise to the rear of the package). See FIGS, 19-23. In a simplified version (See FIGS. 24-25), label 26 is a simple horizontal band of a label extended up to the width of the continuous film used to form the package.

Film 22 can be a flexible sheet material rolled or formed as a blank and made of laminate or co-extruded film structures, with cast or blown film layers, and the like. Examples can include a single layer polymer, such as polypropylene, polyethylene, polylactic acid (PLA), polyester, and the like. Film thickness also can be a function of the desired barrier to gas, moisture, and light; level of desired structural integrity, and the desired depth of the score line (described below).

Film 22 can be a heat sealable copolymer. In some embodiments, the heat sealable polymer forms a seal between 50 and 300 degrees Celsius. Film 22 also can be a pressure sealing film (e.g., a cold seal film or otherwise where no heat is needed). In some embodiments, this pressure sealing film forms a seal between a pressure of about 0.7 and 7.0 Kg/cm, and preferably at about 5.6 Kg/cm.

Film 22 can preferably be a 1.2 to 5 mils laminate, such as a polyethylene terephthalate (PET) layer and an oriented polypropylene (OPP) layer, or optionally be a single layer polymer. The PET layer can have a thickness in the range of about 0.4 to 1.0 mill (preferably about 0.48 mil) and the OPP layer can have a thickness in the range of about 0.6 to 1.2 mil (preferably about 0.7 mil).

A PET layer is flexible to semi-rigid, depending on its thickness. PET is preferred in that it is very lightweight, strong, and can have high transparency when desired for package specifications. It also can be useful as an oxygen (gas) and moisture barrier. The OPP layer can add further strength and be a further barrier to permeability. Lamination components can be joined by adhesives or by extrusions.

Film 22 optionally can also have additional laminate layers. A sealant layer (not shown) can be added to facilitate the formation of seals that enclose product during packaging. As such, the sealant layer would be oriented on the film surface directed to the interior of the package. The sealant layer can be a variety of polymer sealants, such as a heat activated polymer sealant layer like ethylene vinyl acetate (EVA), ionomer plastic (such as one sold under the trade name SURLYN by DuPont), metallocene, organoclay, and the like. Cold sealant and pressure sealants are also possible within the scope of the presented embodiments. It is noted that food grade sealants would be used when food products are anticipated.

In one configuration, stiffeners are added to flexible film 12 to increase the stiffness of the film. These stiffeners may be in addition to the stiffness adjustments that can be made by changing the thicknesses or densities of the previously mentioned laminate layers. These stiffeners can be added as a component of the extruded film or as a separate layer. For example, a laminate layer such as a polyamide polymer (e.g., nylon) may be included in the laminate film structure of flexible film web 12. By one approach, nylon may be added as a laminate layer that is held to the remainder of the film structure by an adhesive. Further, in one configuration, the nylon layer may be positioned in between other layers such that the other flexible film layers are attached on each side of the nylon layer (i.e., a tie layer). In one example, the nylon layer can comprise about 6 to 10 percent of the film thickness or about 0.004 mm. In one approach, the nylon layer comprises about 8 percent of the film thickness. By yet another approach, the nylon layer may comprise about 0.004mm thick layer.

Optional film layers also can include ink layers. For example, one specific laminate can include ink and a primer disposed between a PET and OPP layer. Package integrity features (not shown) also can be included. Metalized layers and various combinations of laminates are also possible within the preferred embodiments.

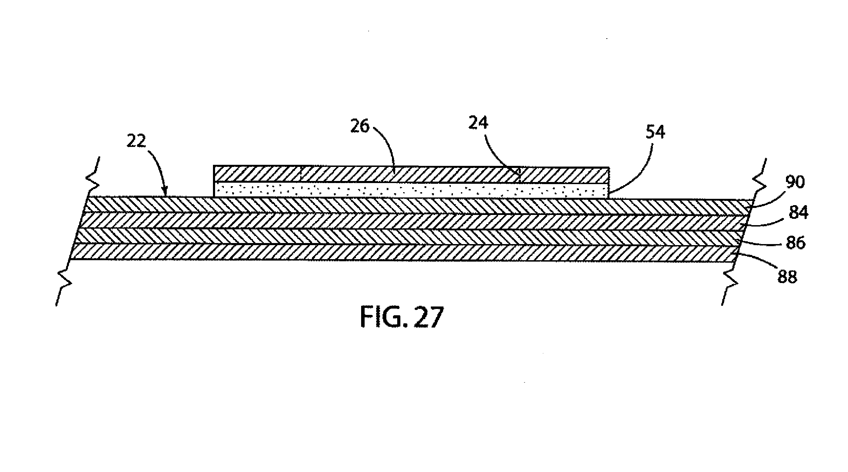

By one approach, and referring to Fig. 27, film 12 can preferably be a laminate such as a polyethylene terephthalate (PET) layer 90 and an oriented polypropylene (OPP) layer 86, or optionally film 12 can be a single layer polymer. A PET layer is flexible to semi-rigid, depending on its thickness. PET is preferred in that it is very lightweight, strong, and can have high transparency when desired for package specifications. It also can be useful as an oxygen (gas) and moisture barrier. The OPP layer can add further strength and be a further barrier to permeability. Lamination components can be joined by adhesives or by extrusions. Optional film layers also can include ink layers 84 (Fig. 27). For example, one specific laminate can include ink and a primer disposed between a PET 90 and OPP layer 86. Metalized layers and various combinations of laminates are also possible within the preferred embodiments.

Film 12 can optionally also have additional laminate layers. A sealant layer, such as a heat sealant layer 88 (Fig. 27) can be added to facilitate the formation of seals that enclose product during packaging. As such, the sealant layer would be oriented on the film surface directed to the interior of the package. The sealant layer can be a variety of polymer sealants such as a heat activated polymer sealant layer like ethylene vinyl acetate (EVA), ionomer plastic (such as one sold under the trade name SURLYN by DuPont), matallicine, orgaonclay, and the like. Cold sealant and pressure sealants are also possible within the scope of the presented embodiments. It is noted that food grade sealants would be used when food products are anticipated.

The scoring of film 22 can be by laser scoring or rotary die cutting of the flexible packaging film 22 structure configured to define or direct a film opening of the package. Preferably, score 24 is added to the side of the film directed to the interior of the package. Die cutting or laser scoring the film is not limited to a gauge of material or composition. Thus, the resulting product is more cost effective than found in the prior art.

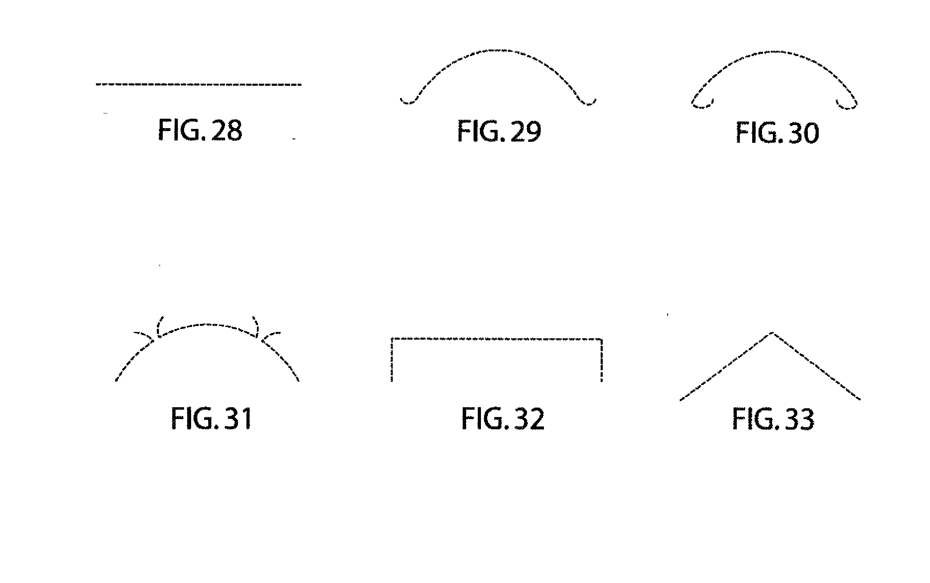

Score lines can include a multitude of configurations to suit desired packaging and product specifications. For example, score line 24 can be arcuate as shown in the FIGS. 1-11, though many other configurations are possible. FIG. 28 is a straight/horizontal score, FIG. 32 is a rectilinear score, and FIG. 33 is an inverted "V" score"

Exposed score lines tend to propagate a continued tear in use. The present package design can show score line configurations that can terminate in patterns to reduce this tendency. Specifically, FIG.1 shows "smile" terminates 48, though other configurations are possible, such as "J" hook terminates (FIGS. 29 and 30), and the like. Other features such as package integrity features are possible. In FIG. 31, the score leaves two tangs that break upon initial opening to indicate to a consumer whether the package has been previously opened.

As illustrated in the Figures, film 22 provides a package opening 50 defined or directed by a score line 24 to allow a user access to product 52. It is noted that package product 52 can include cookies, confectionaries, crackers, chewing gum, chocolate bars, wrapped candy, particulate products (e.g., coffee), and the like. Score line 24 can be of various depths and widths within film 22 and can be formed by various cutting means such as the use of a laser or die cutter. The tear strength of score line 24 must be at least weaker than the adhesive strength of a PSA 32 to allow the film to peel back with label. For illustrative purposes only, in one embodiment, PSA 54 can be configured to have an opening (separating) force of 350 gms/inch and a closing (adhering) force of 200 grams/inch. It is noted though that other opening and closing force ranges would be considered to fall within the scope of the presented package design.

Preferably, score line 24 only goes through a portion of the package to not affect the barrier properties (e.g., gas or moisture) of the package. In this instance, label 26 would not need to provide the initial hermetic barrier, though optionally and inherently, it can. The optional label 26 barrier properties could result from inherent characteristic of the label material, or through an added barrier layer to label 26. It is noted that even in embodiments where score 24 can affect barrier qualities of film 22, the application of label 26 should compensate for the compromised barrier created by the score where the entire scored portion of film 22 is covered by label 26.

Package 20 rigidity can be augmented on front panel 44 by label 26, which naturally urges the film to remain open by its tendency to want to flatten to its original shape. The upward extending geometry of label top edge 64 provides further support to maintain the film opening. This provides easy and clean access to the contents of the entire width of the bag. Further, label 26 has PSA 54 that allows package 20 to be tacked closed, or even resealed, as shown in FIG. 7. As shown in FIG. 7, rear panel 42 can be folded inward into the package opening to create a reclosed/resealed package at the most downward extent of label top edge 64.

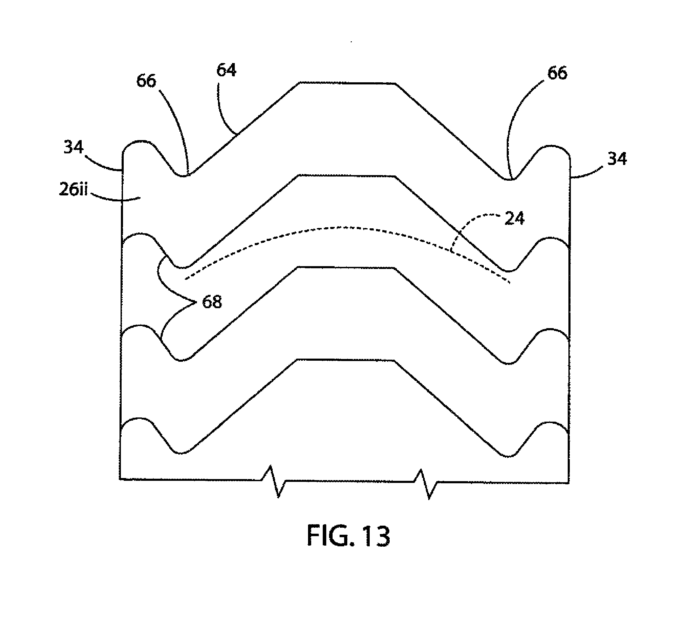

Label 26 and film 22 can be transparent, opaque or optionally printed. It is noted that label 26 can be generally described as any film with an adhesive covering and be within the scope of the presented configurations. It also is noted that labels with liners also can be used. Some label embodiments can be continuously registered on film 22. In these instances, label 26 would be configured to have a female lower edge (i.e., label bottom edge 68) to reciprocate tab 28. (See FIG. 13) In other words, the label bottom edge reciprocates the geometry of the label top edge to allow a continuous roll of labels without wasted material. A potential score line 24 is shown as an exemplary orientation for label placement.

It is noted that an alternate package can form a label from a laminated film 22. In this embodiment, film 22 can be at least two polymer film layers attached with a pressure sensitive adhesive 54 (See, Fig. 23). A first film layer can have a score to form a label, while a second film layer can have a score to define an opening. Scoring can occur before or after laminating film layers, but preferably after lamination. In this instance, overall film thickness can be in the range of about 1.8 to 3 mils, and preferably about 2.1 mils.

Linerless labels can be a facestock having a pressure sensitive adhesive coating on one side but can be rolled into a spool without a liner. This can be accomplished by a release coating applied to the side opposite the adhesive coating or in the alternative a homo-polymer such as polypropylene. Facestocks can include standard paper, film, plastic, fabric, foil, direct thermal, and the like. Linerless labels are available with removable and repositionable adhesives. Alternatively, an adhesive covered flexible film can be used for label 26.

The label can be an oriented polypropylene (OPP), including a bi-axially OPP in the range of about 1.2 mil to 5 mil a preferably about 2 mil or other type of semi-rigid polymer such as PET and the like. PET is preferred because of its thermal resistance in creating a non-peelable seal.

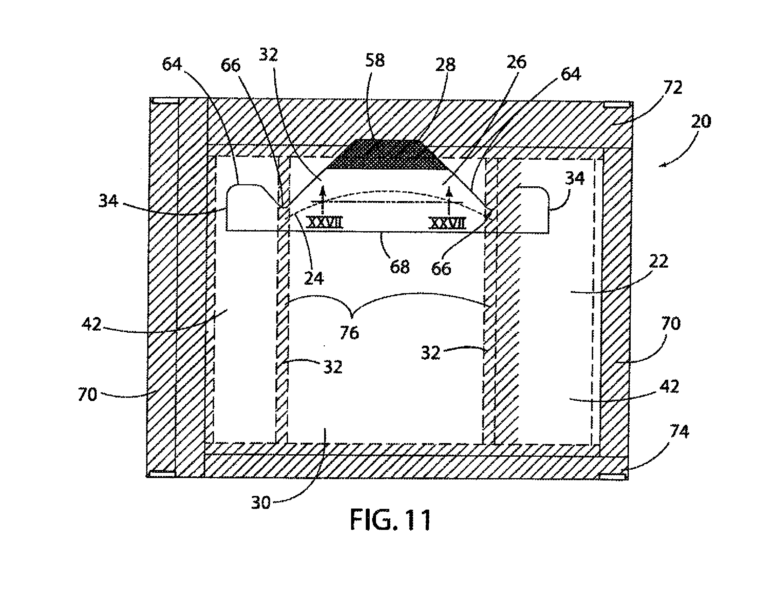

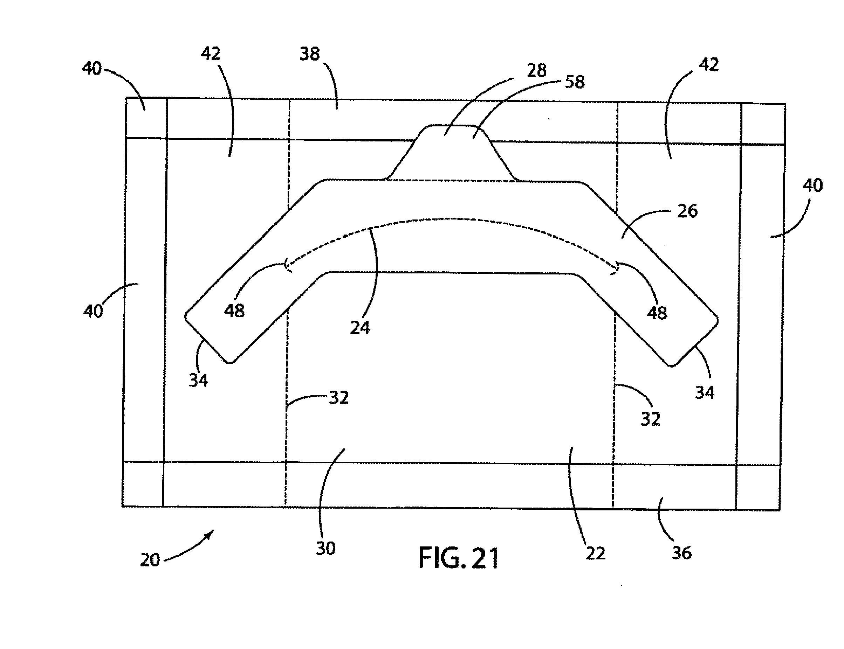

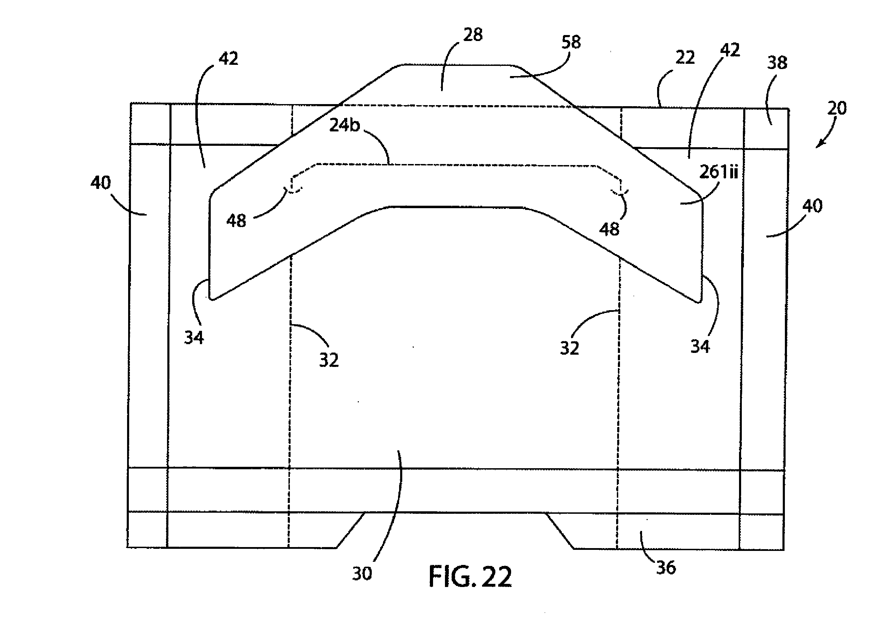

Figs. 11, 21-23 shows a potential blank of package 20. As shown in Fig. 11, area 70 on the package edges can be used to form a fin-seal 40 (or lap seal), area 72 to form leading end-seal 38, and area 74 to form trailing end-seal 36. Area 76 can be used to orient where label top edge 64 changes from downward extent to an upward extent at point 66 on label top edge 64.

Figs. 14-18 show exemplary packages by one approach applied to "slug"-type packaging. "Slug" packaging can include vertically stacked products, which are wrapped by a film to form a sleeve of products. This is a common package type for sleeves of crackers. As shown, single slug packages 60 (Fig. 15) and dual slug 62 (Fig. 16) packaging are possible. Where a column configuration is formed by film 22, it is noted that a fold line, such as fold line 32 shown in other embodiments described here, would not be formed. Nevertheless, the same label configuration and geometry could be applied as before. In this instance though, top edge of label 26 (e.g., 26i and 26ii) could be configured to reverse from a downward extent to an upward extent (similar to the "V" at point 66 in FIGS. 1) at about a range of 150 degrees to 195 degrees (preferably about 180 degrees) about the circumference of the package, such as shown at 82 in FIG. 17. In this instance, the circumference is perpendicular to the orientation of label 26 on the slug. In other words, the "V" point 66 of label top edge 64 on a slug embodiment can be on opposite sides of the slug.

Generally, packages of the preferred embodiments, such as those shown at 20, 60 and 62 can be assembled from a variety of ways such as by first joining film 22 at opposite edges/side of a continuous roll of film to form, e.g., fin-seal 40, and define a package height and interior space. End-seals 36 and 38 can be formed after product 52 (and optional tray, if any) has been placed within package 20 interior space. End-seals 36 and 38 can thus define package 20 width or length. Fin-seal 40 and end-seals 36 and 38 can be thermo formed (i.e., heat welded) or other welding means such as cold weld, low tack seal, sonic waves, and the like, and various combinations thereof. Optionally, seals 36 and 38 can use patterns, crimps or knurls. Seals 36 and 38 are preferably considered to be hermetic seals (i.e., forming a gas and moisture seal).

During assembly, fin-seal 40 can be formed as two film edges are joined and sealed by heated wheels. As discussed above, a sealant layer can be applied to the film to facilitate the type of desired seal. This internal adhesive can be applied up to 100 percent of the interior surface or only where it is needed to provide a seal.

The method to assemble the package can use heat seals, cold seals, extrusion and adhesive lamination, or co-extrusion. When the products are enveloped and sealed within the flow film, the flow film/label laminate can be cut into individual packages.

One exemplary method of making one package embodiment can use a packaging apparatus that positions the film above the product, then wraps the film downwards to form the fin-seal beneath the product. Label 26 can be registered on the film 22. Prior during or after adding label 26, film 22 can be scored on the film surface directed to the interior of the package, though the top surface could also be scored. Preferably, though scoring occurs after the label is applied. As described above, score can be made by laser, mechanical means such as a knife, and the like. Next, fin-seal 40 can be formed as the film 22/label 26 laminate form around a product 52. The sealant layers can be heated wheels pressed together, which activates the heat sealant layer on the interior layer. Where EVA, and the like, are used for a sealant layer, the heated wheels can be heated to between about 85 and 205 degrees Celsius. Again, line speed and film thickness are also a factor in the seal formation and its peelability and hermeticity. Fin-seal 40 can be oriented to the rear panel 42 of package 20. It is noted though that fin-seal 40 can be oriented on any side of package 20.

Once film 22 has enveloped product 52, end-seals 36 and 38 can be formed by adjacent upper and lower seal jaws, which heat seal the ends of the package. A knife can fully separate individual packages or alternately partially cut or perforate the cut between the packages to hold them together.

Fin-seal 40 and end-seals 36 and 38 can optionally be formed from patterns imprinted on heated wheels or seal jaws, which emboss the film as it is pulled through the manufacturing process.

Seal jaws can rotate with film 22 moving through a production line where they meet to form end-seal 38 by an end-sealer. Next, the film is cut with a peel tab cutter die, followed by the forming of trailing end-seal 36. In embodiments using activated heat seals, seal jaws can be heated by heater element. Separate heating elements are possible where different levels of peelability are desired between end-seal 36 and end-seal 38.

In alternate methods, the steps can include scoring the film of material with arcuate score line, applying a label above the score line, and preferably above the entire score line to the point that the amount of exposed PSA allows for reclosure of the opening to contain product after opening, or to extend shelf life. Next, a sleeve can be formed, the sleeve filled with product and sleeve ends sealed. Sealing the ends of the sleeves can occur during or after filling the package sleeve. For example, before filling the sleeve with product, one end seal could be formed, especially if a VFFS configuration is employed. Alternatively, both end seals can be formed after filling the package sleeve with product if an HFFS configuration is employed.

The method of manufacturing the flexible package may affect the particular seals, folds, and various other features of particular flexible pouches. Preferably, the present embodiments are made from a high-speed form-fill-seal (FFS) operation that can produce up to 800 packages per minute.

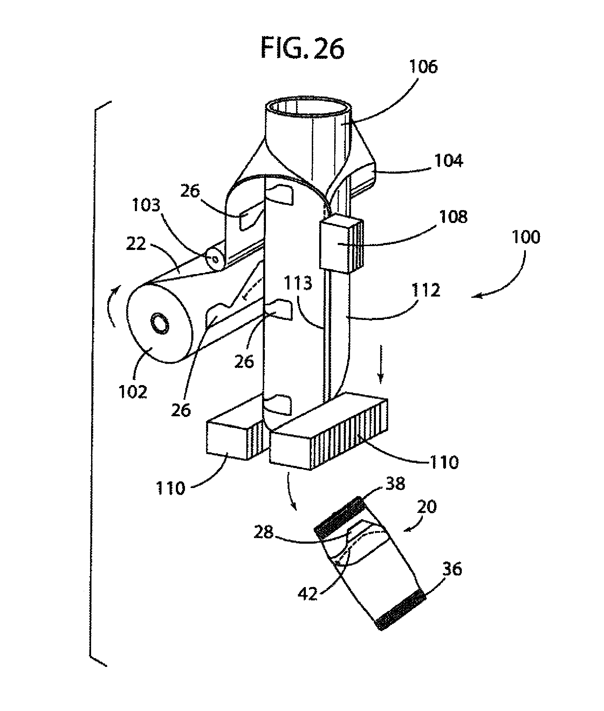

Fig. 26 diagrammatically illustrates one approach to forming a package 20. In this approach, flexible package 20 is prepared using a modified vertical form, fill and seal package machine commonly used in the snack food industry for forming, filling, and sealing bags of chips, cookies, and other like products and is generally shown at 100. Packaging machine 100 shown in Fig. 26 is simplified and does not show support structures and control systems that typically surround a machine, but is provided to demonstrate one example of a working machine. The method of manufacturing the flexible packages may affect the particular seals, folds, and various other features of a particular package. Thus, a variety of manufacturing methods are available to commercially produce the flexible package and FIG. 26 provides but one of those examples.

As shown in FIG. 26, package film 22 can be taken from a film roll 102 and passed through a tensioner 103 to keep film 22 taut. Film 22 can pass through tensioner 104 pulled by drive belts (not shown) in the direction shown at 112. As film 22 passes through tensioner 103, a closure layer 26 (label) can be applied as the film advances in an indexed fashion (i.e., advanced one package length per each label applied) from a label roll.

As shown, label 26 and score 24 can be pre-applied to the film roll. In other words, the closure layer 24 and score 24 are applied to a continuous roll of film before the roll is mounted to device 100 for package formation. Whether pre-applied or applied in-line, label stock is preferably from a linerless roll, but label rolls also could be used. It is noted that in other configurations, score line configurations as described herein could also be pre-applied to the film roll 102 during its manufacture as well as a continuous label. In any event, label 24 is laminated to the film by a pressure sensitive adhesive 54 that is preferably pre-applied to the label roll 114.

Prior to lamination of the label to the film, label 26 can have a portion of the PSA deadened, covered or removed to form a peel tab 28. A deadening device can fold a portion of the label over itself or apply a deadening agent. In some embodiments, this device also could be used to apply PSA to a label without PSA and leave a portion of the label unapplied. The deadened PSA area of the label is used to provide a peel tab to allow a user to pull the label from the formed package.

Next, the packaging machine 100 can pull the film/label laminate over a forming shoulder 104 such as a forming collar and mandrel to provide it with a tubular shape. Opposite longitudinal edges of the film are brought together around a product fill tube 106. The longitudinal edges are sealed, such as by a seal tool 108 to form a fin seal, or overlapped to form a lap seal. In this configuration, the fin seal 40 is used to form a fin seal running parallel to the top of the package.

Edge seals 36 and 38 for package 20 can next be formed by a reciprocating sealing tool 110, which may include a pair of reciprocating sealing bars. The reciprocating sealing bars can be heat sealing bars maintained at a desired temperature to apply heat and pressure to the front and rear walls of the film. The film in this instance would have a heat sealable layer. The heat seal bars 110 are brought together on opposite sides of the tubular web so that heat is conductively transferred to the film from both sides while pressure is applied. The sealing bars may be used in an intermittent or continuous operation. In an intermittent operation, the film is stopped while the sealing bars engage the film. In a continuous operation, the sealing bars may move vertically at the machine speed as they engage the film. In addition, sealing tool 110 may contain a reciprocating knife which acts to separate the bottom pouch from the upper pouch.

Once the operation is complete and the upper pouch has been filled with food product, the upper pouch advances downward and becomes the bottom pouch. In addition to sealing the pouches, the sealing tool 110 also may be used to impart other desired package folds. Thus, the sealing tool 110 may perform a variety of functions simultaneously, including: creating the bottom seal of the pouch that is about to be filled with product; and having a reciprocating knife or cutting tool which separates the pouch that was just filled from the following one which is about to be filled. Accordingly, after a bottom seal is formed in the flexible pouch, the partially formed flexible pouch can then be filled with food product, which is introduced into the pouch via the fill tube 106.

There are a variety of alternative steps to those described in this vertical FFS operation. Also, high speed techniques may be employed instead of application of heat and pressure by heat seal bars as described above. For example, RF energy, ultrasonic energy or other techniques may be employed.

It will be understood that various changes in the details, materials, and arrangements of the flexible package, the laminations, and methods, which have been herein described and illustrated in order to explain the nature of the package and methods, may be made by those skilled in the art within the principle and scope of the embodied packages, laminates and methods as expressed in the appended claims.

The present disclosure also provides embodiments as set out in the following clauses:
1. A package comprising:
   a flexible film forming a body defining an interior contents cavity and having a first pair of opposing edge portions forming a first end seal, a second pair of opposing edge portions forming a second end seal, and a third pair of opposing edge portions forming a longitudinal fin seal extending from the first end seal to the second end seal;
   the body having a first side portion having the longitudinal fin seal and a second side portion generally opposite the first side portion;
   a score formed in the flexible film at the second side portion and defining an opening to the contents cavity upon initial rupturing;
   a closure layer covering the score and a portion of the second side portion around the score and extending on to at least a portion of the first side portion;
   a pressure sensitive adhesive being between the closure layer and the flexible film; and
   the closure layer on the second side portion being capable of at least partial removal from the flexible film to rupture the score and form an opening, and the closure layer on the first side portion resisting further removal of the closure layer from the flexible film.
2. The package of clause 1, wherein the pressure sensitive adhesive has a predetermined affinity between the closure layer and the flexible film such that the score ruptures upon removal of the closure layer from a portion of the second side portion.
3. The package of claim 1, wherein the closure layer forms a living hinge between a first portion of the closure layer covering the score and a second portion of the closure layer spaced from the score.
4. The package of clause 3, wherein the closure layer generally extends transverse to the longitudinal fin seal.
5. The package of clause 4, wherein a top edge portion of the closure layer extends at an angle toward the second end seal as it extends across the second wall portion.
6. The package of clause 5, wherein the angle is in a range of about 15 to 45 degrees.
7. The package of clause 3, wherein the closure layer includes a varying width therealong and narrow portions coinciding with transition portions of the body on each side of the longitudinal fin seal between the first side portion and the second side portion.
8. The package of clause 7, wherein the transition portions include soft folds in the flexible film between the first side portion and the second side portion.
9. The package of clause 7, wherein the narrow portions each include an arcuate edge portion.
10. The package of clause 2, wherein the closure layer has a pair of terminal end portions on the first side portion.
11. The package of clause 10, wherein the terminal end portions are enlarged relative to at least another portion of the closure layer.
12. The package of clause 10, wherein the closure layer is closer to the first end seal than the second end seal.
13. The package of clause 12, wherein the terminal end portions angle toward the second end seal.
14. The package of clause 1, wherein the score is closer to the first end seal than the second end seal.
15. The package of clause 14, wherein the score is arcuate.
16. The package of clause 15, wherein a concave side of the arcuate score faces the second end seal.
17. The package of clause 14, wherein the score is rectilinear.
18. The package of clause 14, wherein the score is pointed.
19. The package of clause 14, wherein the score includes a pair of terminal ends configured to resist further rupturing of the flexible film.
20. The package of clause 19, wherein the terminal ends are configured as hooks.
21. The package of clause 1, wherein the closure layer includes a tack free gripping portion to remove the closure layer from at least a portion of the second side.
22. The package of clause 21, wherein the tack free gripping portion extends adjacent to one of the first and second end seals.
23. The package of clause 21, wherein the tack free gripping portion includes a deadener on the pressure sensitive adhesive.
24. The package of clause 21, wherein the tack free gripping portion includes a portion of the closure layer adhered to itself with the presser sensitive adhesive.
25. The package of clause 21, wherein the tack free gripping portion is void of pressure sensitive adhesive.
26. The package of clause 1, wherein the flexible film comprises a laminate structure.
27. The package of clause 26, wherein the flexible film comprises a laminate of polyethylene terephthalate and oriented polypropylene having a thickness in a range of about 1.5 to 2.5 mils.
28. The package of clause 26, wherein the flexible film comprises a laminate of polyethylene terephthalate having a thickness in a range of about 0.4 to 1.0 mill and oriented polypropylene having a thickness in a range of about 0.6 to 1.2 mils.
29. The package of clause 1, wherein the closure layer is a bi-axially oriented polypropylene having a thickness in a range of about 1.2 mil to 5 mil.
30. A method for manufacturing a flexible package, comprising the steps of:
   forming a score in a portion of a continuous web of flexible film having a longitudinal axis and a predetermined width transverse to the longitudinal axis;
   applying a discrete closure layer to the continuous flexible film along the longitudinal axis with a pressure sensitive adhesive, the continuous closure layer being applied over more than half of than half of the predetermined width and over the score;
   forming a continuous longitudinal fin seal from a pair of opposing edges of the continuous web of flexible film;
   forming a first end seal and a second end seal; and
   forming an adhesive-free gripping portion on the discrete closure layer.
31. A laminate for producing flexible packages, comprising:
   a continuous web of flexible film having a width and a longitudinal axis;
   a discrete closure layer applied to more than half of the width of the continuous web of flexible film and along the longitudinal axis with pressure sensitive adhesive; and
   the continuous web and the continuous closure layer configured to be formed into a series of identical package forming blanks, the flexible film of each identical package forming blank having a score formed therein that coincides with at least a portion of the closure layer and that subsequently forms a package opening when ruptured.
32. The laminate of clause 31, wherein:
   the closure layer is a bi-axially oriented polypropylene having a thickness in the range of about 1.2 mil to 5 mil; and
   the continuous film is laminate in a range of about 1.5 to 2.5 mils having a polyethylene terephthalate layer and an oriented polypropylene layer.
33. The laminate of clause 32, wherein film laminate can include ink and primer layer disposed between the polyethylene terephthalate layer and oriented polypropylene layer.
34. A method of in-line packaging of products in a series of packages, comprising the steps of:
   merging a closure layer to a continuous film web having longitudinal edges spaced a predetermined width;
   providing adhesive between the closure layer and the continuous film web across less than the predetermined width but more than half of the predetermined width;
   scoring the continuous film web corresponding to the closure layer to define an opening in the continuous film web upon initial rupturing caused by removing the continuous substrate;
   forming a longitudinal seal along the longitudinal edges;
   forming a trailing end seal between adjacent packages of a series;
   providing products in a series to be packaged; and
   forming a leading end seal.

## Claims

1. A package comprising:
a flexible film defining an interior contents cavity and having a first pair of edge portions forming a first seal, a second pair of edge portions forming a second seal, and a longitudinal seal extending from the first seal to the second seal;
a score formed in the flexible film and defining, at least in part, an opening to the interior contents cavity;
a closure layer covering the score and a portion of the flexible film around the score, the closure layer extending over more than half of a width of the flexible film;
a pressure sensitive adhesive between the closure layer and the flexible film; and
wherein the package is opened along the score by partial removal of the closure layer from the flexible film and the extension of the closure layer over more than half the width of the flexible film resists further removal of the closure layer from the flexible film.

2. The package of claim 1 wherein the closure layer forms a living hinge between a first portion of the closure layer covering the score and a second portion of the closure layer separated from the score.

3. The package of any of the proceeding claims wherein the package has a shape of at least one of cylindrical shape, column shape, or slug.

4. The package of any of the preceding claims wherein the closure layer extends transversely to the longitudinal seal.

5. The package of any of the proceedings claims wherein the score has an arcuate configuration.

6. The package of any of the proceedings claims wherein the closure layer further comprises a tack free gripping portion to permit a user to grasp the closure layer.

7. The package of any of the preceding claims wherein the package is reclosable by reapplying the closure layer to the film around the score with the pressure sensitive adhesive.

8. The package of any of the preceding claims wherein the package contains multiple servings of food product in a stack.

9. The package of any of the preceding claims wherein the closure layer and score are disposed closer to the first seal than to the second seal.

10. The package of claim 8 wherein a portion of a top edge of the closure layer slopes downwardly toward the second seal.

11. The package of claim 10 wherein the closure layer has a closure layer height that varies.

12. The package of claim 10 or 11 wherein the top edge of the closure layer reverses from a downward extent to an upward extent at opposite side points about a circumference of the package.

13. A laminate for producing flexible packages comprising:
a web of flexible film having a width;
a series of scores formed into the web of flexible film;
a series of a discrete closure layers applied to the web of flexible film, the discrete closure layers extending over more than half of the width of the web of flexible film;
a pressure sensitive adhesive between the web of flexible film and the discrete closure layers; and
wherein the web of flexible film is configured to be formed into a series of packages, the flexible film of each package having one of the series of scores formed therein with one of the series of discrete closure layers applied thereon.

14. A method of forming packages comprising:
feeding a web of film having a width;
applying discrete closure layers to the web of film with a pressure sensitive adhesive, the discrete closure layers covering more than half of the width of the web of film;
forming a score in the web of film;
forming a longitudinal seal along longitudinal edges of the film;
forming a first seal and a second seal; and
cutting between the first and second seals of adjacent packages.
